(19) Europäisches Patentamt
European Patent Office
Office européen des brevets

(11) **EP 3 150 270 A1**

(12) **EUROPEAN PATENT APPLICATION**
published in accordance with Art. 153(4) EPC

(43) Date of publication:
**05.04.2017 Bulletin 2017/14**

(51) Int Cl.:
***B01D 53/14*** [(2006.01)]   ***B01D 53/62*** [(2006.01)]
***C01B 32/50*** [(2017.01)]

(21) Application number: **15818919.1**

(22) Date of filing: **19.06.2015**

(86) International application number:
**PCT/JP2015/067751**

(87) International publication number:
**WO 2016/006415 (14.01.2016 Gazette 2016/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **10.07.2014 JP 2014142555**

(71) Applicant: **Mitsubishi Heavy Industries, Ltd.
Tokyo 108-8215 (JP)**

(72) Inventors:
• **NAKAGAWA, Yosuke**
  **Tokyo 108-8215 (JP)**
• **SHIMADA, Daisuke**
  **Tokyo 108-8215 (JP)**
• **TSUJIUCHI, Tatsuya**
  **Tokyo 108-8215 (JP)**

(74) Representative: **Studio Torta S.p.A.
Via Viotti, 9
10121 Torino (IT)**

(54) **CO2 RECOVERY DEVICE AND CO2 RECOVERY METHOD**

(57)     Provided are a $CO_2$ recovery unit and a $CO_2$ recovery method which enable stable operation to continue even if an operation condition has changed. This $CO_2$ recovery unit (1) is equipped with: a $CO_2$-absorber (14) that causes $CO_2$ included in flue gas (11A) to be absorbed into a $CO_2$-absorbing solution (13); a $CO_2$-regenerator (15) which regenerates the $CO_2$-absorbing solution (13) by heating; and a $CO_2$ recovery amount control unit (111) which calculates a computed target value for the $CO_2$ recovery amount and a computed target value for the $CO_2$ recovery rate on the basis of a set value for the $CO_2$ recovery rate, actual measured values of the $CO_2$ concentration, gas flow rate, and temperature of the flue gas (11A), and maximum values for the $CO_2$ recovery amounts in the $CO_2$-absorber (14) and the $CO_2$-regenerator (15). On the basis of the set value for the $CO_2$ recovery rate or the computed target value for the $CO_2$ recovery rate, the $CO_2$ recovery amount control unit (111) controls: the amount of the $CO_2$-absorbing solution (13) supplied to the $CO_2$-absorber (14); the amount of the $CO_2$-absorbing solution (13) supplied to the $CO_2$-regenerator (15); and the amount of saturated steam (S) supplied to a regeneration heater (31) of the $CO_2$-regenerator (15).

FIG. 1

EP 3 150 270 A1

## Description

Technical Field

The present invention relates to a $CO_2$ recovery unit and a $CO_2$ recovery method, and particularly to a $CO_2$ recovery unit and a $CO_2$ recovery method that recover $CO_2$ in a gas to be treated, using a $CO_2$-absorbing solution.

Background Art

In the related art, $CO_2$ recovery units that recover $CO_2$ exhausted from boilers or the like of thermoelectric power plants are suggested (for example, refer to PTL 1). In the $CO_2$ recovery units, flue gas is introduced into a $CO_2$-absorber, a $CO_2$-absorbing solution is brought into contact with $CO_2$ included in the flue gas so that $CO_2$ is made to be absorbed thereinto. The $CO_2$-absorbing solution that has absorbed $CO_2$ is sent to a $CO_2$-regenerator and is decarboxylated with heating by a regeneration heater that regenerates the $CO_2$-absorbing solution, and thereby, a high-concentration $CO_2$ gas is recovered. The $CO_2$-absorbing solution after the decarboxylation is supplied to the $CO_2$-absorber by a liquid feed pump, and the $CO_2$-absorbing solution is circulated and used between the $CO_2$-absorber and the $CO_2$-regenerator.

Citation List

Patent Literature

[PTL 1] Japanese Patent No. 5237204

Summary of Invention

Technical Problem

Meanwhile, in a $CO_2$ recovery unit described in PTL 1, operation is performed in a state where a constant $CO_2$ recovery rate is maintained by adjusting the $CO_2$-absorbing solution to be supplied to the $CO_2$-absorber and the flow rate of saturated steam to be supplied to a regeneration heater of the $CO_2$-regenerator, on the basis of the gas flow rate of the flue gas, the introduction temperature of the flue gas, or the like. However, in a case where such control is performed, a control in which the $CO_2$ recovery unit operates in a state where the constant $CO_2$ recovery rate is maintained even if the $CO_2$ concentration in the flue gas and the gas flow rate of the flue gas have increased is performed. Thus, for example, the load of the $CO_2$ recovery unit may increase if there are restrictions or the like to the amount of steam used in the $CO_2$ recovery unit.

The invention has been made in view of such actual circumstances, and an object thereof is to provide a $CO_2$ recovery unit and a $CO_2$ recovery method that enable stable operation to continue even if operation conditions have changed.

Solution to Problem

A $CO_2$ recovery unit of the invention includes a $CO_2$-absorber that brings a gas to be treated and a $CO_2$-absorbing solution into contact with each other to cause $CO_2$ included in the gas to be treated to be absorbed into the $CO_2$-absorbing solution; a $CO_2$-regenerator that heats the $CO_2$-absorbing solution which has absorbed $CO_2$, releases $CO_2$ from the $CO_2$-absorbing solution, and regenerates the $CO_2$-absorbing solution; and a $CO_2$ recovery amount control unit that calculates a computed target value of a $CO_2$ recovery amount and a computed target value of a $CO_2$ recovery rate on the basis of a set value of the $CO_2$ recovery rate, actual measured values of $CO_2$ concentration, gas flow rate, and temperature of the gas to be treated, and maximum values of the $CO_2$ recovery amounts in the $CO_2$ absorber and the $CO_2$-regenerator and that controls the amount of the $CO_2$-absorbing solution supplied to the $CO_2$-absorber, the amount of the $CO_2$-absorbing solution supplied to the $CO_2$-regenerator and the amount of saturated steam supplied to a regeneration heater of the $CO_2$-regenerator, on the basis of the set value of the $CO_2$ recovery rate or the computed target value of the $CO_2$ recovery rate.

According to this $CO_2$ recovery unit, the circulation amount of the $CO_2$-absorbing solution and the amount of the saturated steam supplied to the regeneration heater can be appropriately controlled according to changes in the actual measured values of the $CO_2$ recovery rate and the $CO_2$ recovery amount in the gas to be treated. Accordingly, even in a case where there is an influence on a predetermined relational expression to be used for control and the precision of a measuring instrument due to changes in operation conditions and the measuring instrument, the $CO_2$

recovery unit that can control the $CO_2$ recovery amount and/or the $CO_2$ recovery rate to a target value with high precision can be realized.

In the $CO_2$ recovery unit of the invention, it is preferable that the $CO_2$ recovery amount control unit calculates the computed target value of the $CO_2$ recovery rate on the basis of the following Formulas (1) to (3).

$$Y1 = X1 \times X2 \times X3 \times \alpha \qquad \text{Formula (1)}$$

$$Y2 = \min(X4, Y1) \qquad \text{Formula (2)}$$

$$Y3 = Y2/(X2 \times X3 \times \alpha) \qquad \text{Formula (3)}$$

(In Formulas (1) to (3), X1 represents the set value of the $CO_2$ recovery rate, X2 represents an actual measured value of the $CO_2$ concentration of the gas to be treated, X3 represents an actual measured value of the gas flow rate of the gas to be treated, X4 represents a maximum value of the $CO_2$ recovery amount, Y1 represents a target value of the $CO_2$ recovery amount, Y2 represents a computed target value of the $CO_2$ recovery amount, Y3 represents a computed target value of the $CO_2$ recovery rate, and $\alpha$ represents a conversion factor).

In the $CO_2$ recovery unit of the invention, it is preferable that the $CO_2$ recovery amount control unit calculates the computed target value of the $CO_2$ recovery rate on the basis of the maximum value of the $CO_2$ recovery amount in a case where a target value of the $CO_2$ recovery amount exceeds the maximum value of the $CO_2$ recovery amount, and calculates the computed target value of the $CO_2$ recovery rate on the basis of the calculated target value of the $CO_2$ recovery amount in a case where the target value of the $CO_2$ recovery amount is equal to or lower than the maximum value of the $CO_2$ recovery amount.

In the $CO_2$ recovery unit of the invention, it is preferable that the $CO_2$ recovery amount control unit calculates the computed target value of the $CO_2$ recovery amount on the basis of threshold values in a case where the actual measured values of the gas flow rate, $CO_2$ concentration, and temperature of the gas to be treated exceed predetermined threshold values.

In the $CO_2$ recovery unit of the invention, it is preferable that the $CO_2$ recovery amount control unit feedback-controls the operation of the overall device using the computed target value of the $CO_2$ recovery amount.

A $CO_2$ recovery method of the invention includes a process of bringing a gas to be treated and a $CO_2$-absorbing solution into contact with each other to cause $CO_2$ included in the gas to be treated to be absorbed into the $CO_2$-absorbing solution in a $CO_2$-absorber; and a process of heating the $CO_2$-absorbing solution which has absorbed $CO_2$, releasing $CO_2$ from the $CO_2$-absorbing solution, and regenerating the $CO_2$-absorbing solution in a $CO_2$-regenerator. A computed target value of a $CO_2$ recovery amount and a computed target value of a $CO_2$ recovery rate are calculated on the basis of a set value of the $CO_2$ recovery rate, actual measured values of $CO_2$ concentration, gas flow rate, and temperature of the gas to be treated, and maximum values of the $CO_2$ recovery amounts in the $CO_2$-absorber and the $CO_2$-regenerator, and the amount of the $CO_2$-absorbing solution supplied to the $CO_2$-absorber, the amount of the $CO_2$-absorbing solution supplied to the $CO_2$-regenerator, and the amount of saturated steam supplied to a regeneration heater of the $CO_2$-regenerator are controlled on the basis of the set value of the $CO_2$ recovery rate or the computed target value of the $CO_2$ recovery rate.

According to this $CO_2$ recovery method, the circulation amount of the $CO_2$-absorbing solution and the amount of the saturated steam supplied to the regeneration heater can be appropriately controlled according to changes in the actual measured values of the $CO_2$ recovery rate and the $CO_2$ recovery amount in the gas to be treated. Accordingly, even in a case where there is an influence on a predetermined relational expression to be used for control and the precision of a measuring instrument due to changes in operation conditions and the measuring instrument, the $CO_2$ recovery method that can control the $CO_2$ recovery amount and/or the $CO_2$ recovery rate to a target value with high precision can be realized.

In the $CO_2$ recovery method of the invention, it is preferable that the computed target value of the $CO_2$ recovery rate is calculated on the basis of the following Formulas (1) to (3).

$$Y1 = X1 \times X2 \times X3 \times \alpha \qquad \text{Formula (1)}$$

$$Y2 = \min(X4, Y1) \qquad \text{Formula (2)}$$

$$Y3 = Y2/(X2 \times X3 \times \alpha) \qquad \text{Formula (3)}$$

(In Formulas (1) to (3), X1 represents the set value of the $CO_2$ recovery rate, X2 represents an actual measured value of the $CO_2$ concentration of the gas to be treated, X3 represents an actual measured value of the gas flow rate of the gas to be treated, X4 represents a maximum value of the $CO_2$ recovery amount, Y1 represents a target value of the $CO_2$ recovery amount, Y2 represents a computed target value of the $CO_2$ recovery amount, Y3 represents a computed target value of the $CO_2$ recovery rate, and $\alpha$ represents a conversion factor).

In the $CO_2$ recovery method of the invention, it is preferable that the computed target value of the $CO_2$ recovery rate is calculated on the basis of a maximum value of the $CO_2$ recovery amount in a case where a target value of the $CO_2$ recovery amount exceeds a maximum value of the $CO_2$ recovery amount, and calculates the computed target value of the $CO_2$ recovery rate on the basis of the target value of the $CO_2$ recovery amount in a case where the target value of the $CO_2$ recovery amount is equal to or lower than the maximum value of the $CO_2$ recovery amount.

In the $CO_2$ recovery method of the invention, it is preferable that the computed target value of the $CO_2$ recovery amount is calculated on the basis of threshold values in a case where the actual measured values of the gas flow rate, $CO_2$ concentration, and temperature of the gas to be treated exceed predetermined threshold values.

In the $CO_2$ recovery method of the invention, it is preferable that the operation of the overall device is feedback-controlled using the computed target value of the $CO_2$ recovery amount.

Advantageous Effects of Invention

According to the invention, a $CO_2$ recovery unit and a $CO_2$ recovery method that enable stable operation to continue even if operation conditions have changed can be realized.

Brief Description of Drawings

Fig. 1 is a schematic view of a $CO_2$ recovery unit related to an embodiment of the invention.
Fig. 2 is a functional block diagram of a $CO_2$ recovery amount control unit related to the embodiment of the invention.
Fig. 3 is a block diagram illustrating operation control using the $CO_2$ recovery amount control unit related to the embodiment of the invention.

Description of Embodiments

The present inventors have noted that, in a related-art $CO_2$ recovery unit that operates in a state where a constant $CO_2$ recovery rate is maintained, a control in which the $CO_2$ recovery unit operates in a state where the constant $CO_2$ recovery rate is maintained even if the $CO_2$ concentration in a gas to be treated and the gas flow rate of flue gas have increased may be performed, and the load of the $CO_2$ recovery unit may increase. The present inventors also have found out that $CO_2$ recovery amount calculated using a gas flowmeter and a gas concentration meter is controlled such that the $CO_2$ recovery amount becomes equal to or lower than a reference value, so that an increase in the load of the $CO_2$ recovery unit can be prevented even in a case where operation conditions have fluctuated, and have completed the invention.

Hereinafter, an embodiment of the invention will be described in detail with reference to the accompanying drawings. In addition, the invention is not limited to the following embodiment, and can be appropriately changed and carried out. Additionally, the configuration of the following $CO_2$ recovery unit can be appropriately combined and carried out.

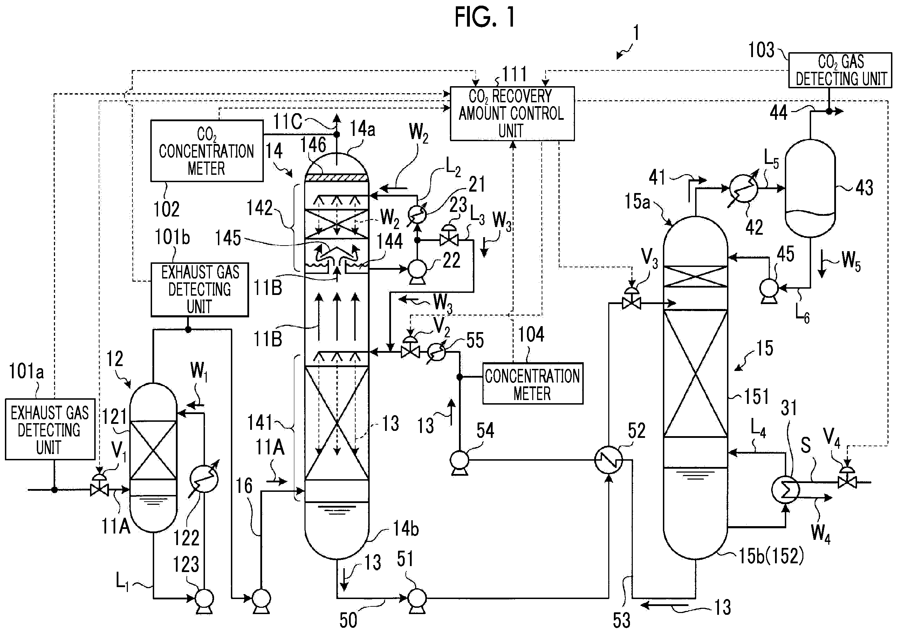

Fig. 1 is a schematic view of a $CO_2$ recovery unit related to an embodiment of the invention. As illustrated in Fig. 1, a $CO_2$ recovery unit 1 is an device that absorbs $CO_2$ in flue gas (a gas to be treated) 11A containing $CO_2$ exhausted from industrial facilities, such as a boiler and a gas turbine, and recovers a high-concentration $CO_2$ gas. The $CO_2$ recovery unit 1 includes a quencher 12 that cools the flue gas 11A containing $CO_2$ exhausted from industrial facilities, such as a boiler and a gas turbine; a $CO_2$-absorber 14 that is provided in a subsequent stage of the quencher 12, brings the cooled flue gas 11A into contact with a $CO_2$-absorbing solution 13, and makes the $CO_2$-absorbing solution 13 absorb and remove $CO_2$ in the flue gas 11A; and a $CO_2$-regenerator 15 that is provided in the subsequent stage of the $CO_2$-absorber 14, releases $CO_2$ from the $CO_2$-absorbing solution 13 that has absorbed the $CO_2$, and regenerates the $CO_2$-absorbing solution 13.

In the $CO_2$ recovery unit 1, the $CO_2$-absorbing solution 13 circulates between the $CO_2$-absorber 14 and the

$CO_2$-regenerator 15. The $CO_2$-absorbing solution 13 (lean solution) absorbs $CO_2$ in the $CO_2$-absorber 14, and is supplied to the $CO_2$-regenerator 15 as the $CO_2$-absorbing solution 13 (rich solution). Additionally, the $CO_2$-absorbing solution 13 (rich solution) has substantially all $CO_2$ removed and regenerated in the $CO_2$-regenerator 15, and is supplied to the $CO_2$-absorber 14 as the $CO_2$-absorbing solution 13 (lean solution).

The quencher 12 has a quenching section 121 that cools the flue gas 11A. A circulation line $L_1$ is provided between a bottom part of the quencher 12 and a top part of the quenching section 121. A heat exchanger 122 that cools cooling water $W_1$, and a circulation pump 123 that circulate the cooling water $W_1$ within the circulation line $L_1$ are provided in the circulation line $L_1$.

In the quenching section 121, the flue gas 11A is cooled by bringing the flue gas 11A into countercurrent contact with the cooling water $W_1$. The heat exchanger 122 cools the cooling water $W_1$ heated by the heat exchange with the flue gas 11A. The circulation pump 123 supplies the cooling water $W_1$, which has flowed down to the bottom part of the quencher 12, to the top part of the quenching section 121 via the heat exchanger 122.

The $CO_2$-absorber 14 includes a $CO_2$ absorption section 141 that is provided on a lower part side of the $CO_2$-absorber 14 and has the flue gas 11A cooled in the quencher 12 supplied thereto, a washing section 142 that is provided on an upper part side of the $CO_2$-absorber 14. A liquid storage section 144 that stores cleaning water $W_2$ for cleaning a flue gas 11B from which $CO_2$ has been removed is provided at a bottom part of the washing section 142. A circulation line $L_2$, through which the cleaning water $W_2$, containing the $CO_2$-absorbing solution 13 recovered in the liquid storage section 144, is supplied and circulated from a top part side of the washing section 142, is provided between the liquid storage section 144 and an upper part of the washing section 142. The circulation line $L_2$ is provided with a heat exchanger 21 that cools the cleaning water $W_2$, and a circulation pump 22 that circulates the cleaning water $W_2$, containing the $CO_2$-absorbing solution 13 recovered in the liquid storage section 144, within the circulation line $L_2$ via the heat exchanger 21. Additionally, the circulation line $L_2$ is provided with an extraction line $L_3$ through which a portion of the cleaning water $W_2$ (cleaning water $W_3$) is extracted and supplied to the $CO_2$ absorption section 141. The extraction line $L_3$ is provided with a control valve 23 that adjusts the amount of supply of cleaning water $W_3$ supplied to the $CO_2$-absorbing solution 13 (lean solution).

In the $CO_2$ absorption section 141, the flue gas 11A containing $CO_2$ and the $CO_2$-absorbing solution 13 containing alkanolamine or the like come into countercurrent contact with each other. Accordingly, $CO_2$ in the flue gas 11A is absorbed by the $CO_2$-absorbing solution 13 through a chemical reaction shown in the following reaction formula. As a result, the flue gas 11A containing $CO_2$ becomes the flue gas 11B from which $CO_2$ has been removed by passing through the $CO_2$ absorption section 141.

$$R\text{-}NH_2 + H_2O + CO_2 \rightarrow R\text{-}NH_3HCO_3$$

In the washing section 142, the flue gas 11B from which $CO_2$ has been removed rises via a chimney tray 145. Then, the flue gas 11B is brought into gas-liquid contact with the cleaning water $W_2$ supplied from the top part side of the washing section 142, and becomes a flue gas 11C from which the $CO_2$-absorbing solution 13 entrained in the flue gas 11B has been recovered by circulation cleaning. The flue gas 11C is exhausted to the outside from a tower top part 14a of the $CO_2$-absorber 14 after mist in the gas is trapped by a mist eliminator 146.

A rich solution supply tube 50 through which the $CO_2$-absorbing solution 13 (rich solution), which has absorbed $CO_2$ in the $CO_2$-absorber 14, is supplied to an upper part side of the $CO_2$-regenerator 15, is provided between a tower bottom part 14b of the $CO_2$-absorber 14 and an upper part of the $CO_2$-regenerator 15. The rich solution supply tube 50 is provided with a rich solvent pump 51 that supplies the $CO_2$-absorbing solution 13 (rich solution), which has absorbed $CO_2$ in the $CO_2$-absorber 14, toward the $CO_2$-regenerator 15, and a rich-lean solution heat exchanger 52 that heats the $CO_2$-absorbing solution 13 (rich solution) that has absorbed $CO_2$, using the $CO_2$-absorbing solution 13 (lean solution) which has been heated with saturated steam and from which $CO_2$ has been removed.

The $CO_2$-regenerator 15 includes a $CO_2$-absorbing solution supply part 151 that is provided at a central part of the $CO_2$-regenerator 15 and has the $CO_2$-absorbing solution 13, which has absorbed $CO_2$, supplied thereto, and a mirror surface part 152 of a tower bottom part 15b of a lower part of the $CO_2$-absorbing solution supply part 151. The tower bottom part 15b of the $CO_2$-regenerator 15 is provided with a circulation line $L_4$ through which the $CO_2$-absorbing solution 13 that has flowed down to the tower bottom part 15b circulates. The circulation line $L_4$ is provided with a regeneration heater 31 that heats the $CO_2$-absorbing solution 13 with saturated steam S.

A tower top part 15a of the $CO_2$-regenerator 15 is provided with a gas exhaust line $L_5$ through which a $CO_2$ gas 41 accompanied by the saturated steam S is exhausted. The gas exhaust line $L_5$ is provided with a condenser 42 that condenses moisture in the $CO_2$ gas 41, and a separation drum 43 that separates the $CO_2$ gas 41 from condensed water $W_5$. The separation drum 43 separates the condensed water $W_5$ from the $CO_2$ gas 41, and releases a $CO_2$ gas 44, from which the condensed water $W_5$ has been separated, from an upper part of the separation drum 43 to the outside. A condensed water line $L_6$ through which the condensed water $W_5$ separated by the separation drum 43 is supplied to the upper part of the $CO_2$-regenerator 15 is provided between a bottom part of the separation drum 43 and the upper

part of the $CO_2$-regenerator 15. The condensed water line $L_6$ is provided with a condensed water circulation pump 45 that supplies the condensed water $W_5$ separated by the separation drum 43 to the upper part of the $CO_2$-regenerator 15.

Additionally, the tower bottom part 15b of the $CO_2$-regenerator 15 and an upper part of the $CO_2$ absorption section 141 of the $CO_2$-absorber 14 are provided with a lean solution supply tube 53 through which the $CO_2$-absorbing solution 13 (lean solution) in the tower bottom part 15b of the $CO_2$-regenerator 15 is supplied to the upper part of the $CO_2$ absorption section 141. The lean solution supply tube 53 is provided with the rich-lean solution heat exchanger 52 that heats the $CO_2$-absorbing solution 13 (rich solution), which has absorbed $CO_2$, using the $CO_2$-absorbing solution 13 (lean solution) which has been heated with the saturated steam S and from which $CO_2$ has been removed, a lean solution pump 54 that supplies the $CO_2$-absorbing solution 13 (lean solution) in the tower bottom part 15b of the $CO_2$-regenerator 15 to the upper part of the $CO_2$ absorption section 141, and a quenching section 55 that cools the $CO_2$-absorbing solution 13 (lean solution) to a predetermined temperature.

The $CO_2$ recovery unit 1 related to the present embodiment includes a flue gas detecting unit 101 that is provided in a flow passage for the flue gas 11A to be introduced into the quencher 12, a $CO_2$ concentration meter 102 that is provided in a flow passage for the flue gas 11C exhausted from $CO_2$-absorber 14, a $CO_2$ gas detecting unit 103 that is provided in a flow passage for the $CO_2$ gas 44 exhausted from the separation drum 43, and a concentration meter 104 that measures the concentration of the $CO_2$-absorbing solution (lean solution) 13 to be supplied to the $CO_2$-absorber 14.

A flue gas detecting unit 101a measures $CO_2$ concentration in the flue gas 11A to be introduced into the quencher 12, and transmits the measured $CO_2$ concentration to a $CO_2$ recovery amount control unit 111. Additionally, a flue gas detecting unit 101b measures the gas flow rate and the gas temperature of the flue gas 11A, and transmits the gas flow rate and the gas temperature to the $CO_2$ recovery amount control unit 111. The $CO_2$ concentration meter 102 detects $CO_2$ concentration in the flue gas 11C exhausted from the $CO_2$-absorber 14, and transmits the detected $CO_2$ concentration to the $CO_2$ recovery amount control unit 111.

The $CO_2$ gas detecting unit 103 detects the gas flow rate and the concentration of the $CO_2$ gas 44 exhausted from the separation drum 43, and transmits the gas flow rate and the concentration to the $CO_2$ recovery amount control unit 111. The concentration meter 104 measures the concentration of the $CO_2$-absorbing solution (lean solution) 13 to be supplied to the $CO_2$-absorber 14, and transmits the measured concentration of the $CO_2$-absorbing solution (lean solution) 13 to the $CO_2$ recovery amount control unit 111.

The $CO_2$ recovery amount control unit 111 calculates a computed target value of the $CO_2$ recovery rate on the basis of a set value of the $CO_2$ recovery rate, actual measured values of the $CO_2$ concentration, gas flow rate, and temperature of the flue gas 11A, and a maximum value of the $CO_2$ recovery amount of the overall device. Additionally, the $CO_2$ recovery amount control unit 111 controls the amount of the $CO_2$-absorbing solution 13 supplied to the $CO_2$-absorber 14 and the amount of the $CO_2$-absorbing solution 13 supplied to the $CO_2$-regenerator 15 on the basis of the calculated computed target value of the $CO_2$ recovery rate, and controls the amount of the saturated steam S supplied to the regeneration heater 31 of the $CO_2$-regenerator 15.

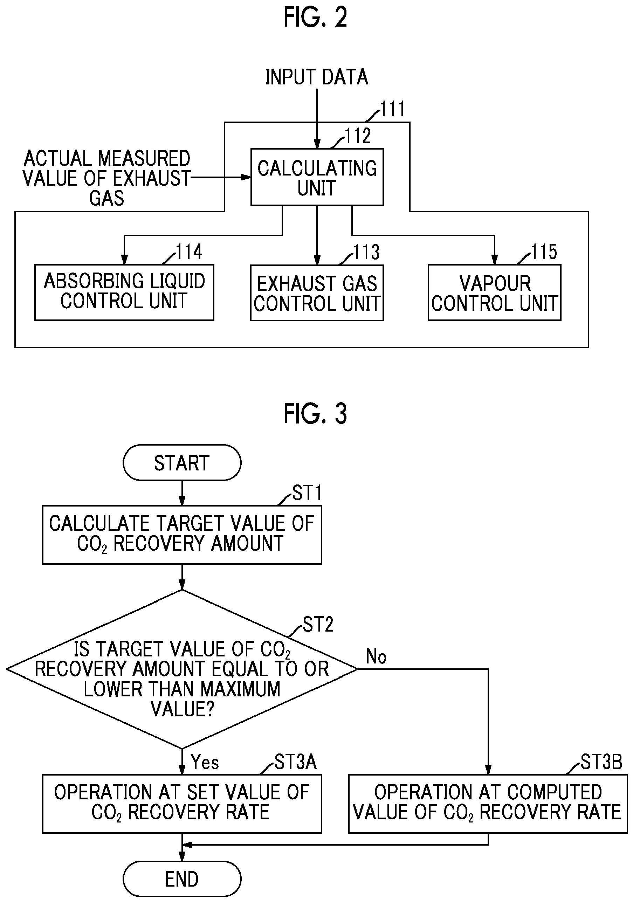

Fig. 2 is a functional block diagram of the $CO_2$ recovery amount control unit 111 related to the present embodiment of the invention. The $CO_2$ recovery amount control unit 111 related to the present embodiment includes a calculating unit 112, and a flue gas control unit 113, an absorbing solution control unit 114, and a steam control unit 115. The calculating unit 112 calculates the maximum value of the $CO_2$ recovery amount that is determined according to device design conditions and utility conditions of steam or the like and is capable being recovered by the $CO_2$ recovery unit 1. Additionally, the calculating unit 112 calculates a target value of the $CO_2$ recovery amount on the basis of the set value of the $CO_2$ recovery rate that is set in advance, the $CO_2$ concentration in the flue gas 11A measured by the flue gas detecting unit 101a, and an actual measured value of the gas flow rate of the flue gas 11A measured by the flue gas detecting unit 101b. The target value of the $CO_2$ recovery amount is a $CO_2$ recovery amount that is determined on the basis of the set value of the $CO_2$ recovery rate that is set in advance. Moreover, the calculating unit 112 calculates the computed target value of the $CO_2$ recovery amount on the basis of the target value of the $CO_2$ recovery amount and the calculated maximum value of the $CO_2$ recovery amount. The computed target value of the $CO_2$ recovery amount is, for example, any smaller value of the maximum value of the $CO_2$ recovery amount or and the target value of the $CO_2$ recovery amount. Additionally, the calculating unit 112 calculates the computed target value of the $CO_2$ recovery rate on the basis of the calculated computed target value of the $CO_2$ recovery amount, the $CO_2$ concentration in the flue gas 11A, and the actual measured value of the gas flow rate of the flue gas 11A. The computed target value of the $CO_2$ recovery rate is a value of the $CO_2$ recovery rate for realizing a $CO_2$ recovery amount according to actual operation conditions or the like of the $CO_2$ recovery unit 1. Moreover, the calculating unit 112 transmits the calculated computed target values of the $CO_2$ recovery rate and the $CO_2$ recovery amount to the flue gas control unit 113, the absorbing solution control unit 114, and the steam control unit 115.

The calculating unit 112 calculates the computed target value that is the target value of the $CO_2$ recovery rate of the overall device on the basis of various kinds of input data and various actual measured values. It is preferable that the calculating unit 112 calculates the computed target value of the $CO_2$ recovery rate, for example, on the basis of the following Formulas (1) to (3). In addition, $\alpha$ is any value that is determined depending on design conditions or the like

of the $CO_2$ recovery unit.

$$Y1 = X1 \times X2 \times X3 \times \alpha \qquad \text{Formula (1)}$$

$$Y2 = \min(X4, Y1) \qquad \text{Formula (2)}$$

$$Y3 = Y2/(X2 \times X3 \times \alpha) \qquad \text{Formula (3)}$$

(In Formulas (1) to (3), X1 represents the set value of the $CO_2$ recovery rate, X2 represents the actual measured value of the $CO_2$ concentration of the flue gas, X3 represents the actual measured value of the gas flow rate of the flue gas, X4 represents the maximum value of the $CO_2$ recovery amount, Y1 represents the target value of the $CO_2$ recovery amount, Y2 represents the computed target value of the $CO_2$ recovery amount, Y3 represents the computed target value of the $CO_2$ recovery rate, and $\alpha$ represents a conversion factor).

The flue gas control unit 113 controls the flow rate of the flue gas 11A to be introduced into the quencher 12 via a control valve $V_1$ on the basis of the set value and the computed target value of the $CO_2$ recovery rate calculated by the calculating unit 112. The absorbing solution control unit 114 controls the liquid volume of the $CO_2$-absorbing solution (lean solution) 13 to be supplied to the $CO_2$-absorber 14 via a control valve $V_2$ on the basis of the set value and the computed target value of the $CO_2$ recovery rate calculated by the calculating unit 112, and controls the liquid volume of the $CO_2$-absorbing solution (rich solution) 13 to be supplied to the $CO_2$-regenerator 15 via a control valve $V_3$. The steam control unit 115 controls the flow rate of the saturated steam S to be supplied to the regeneration heater 31 via a control valve $V_4$ on the basis of the set value and the computed target value of the $CO_2$ recovery rate calculated by the calculating unit 112.

It is preferable that the calculating unit 112 calculates the computed target value of the $CO_2$ recovery rate on the basis of the maximum value of the $CO_2$ recovery amount in a case where the target value of the $CO_2$ recovery amount exceeds the maximum value of the $CO_2$ recovery amount, and calculates the computed target value of the $CO_2$ recovery rate on the basis of the target value of the $CO_2$ recovery amount in a case where the target value of the $CO_2$ recovery amount is equal to or lower than the maximum value of the $CO_2$ recovery amount. Accordingly, even in a case where operation conditions, such as the $CO_2$ concentration, gas flow rate, and temperature of the flue gas 11A, fluctuate, and $CO_2$ introduced into $CO_2$ recovery unit 1 has increased, the $CO_2$ recovery unit 1 can be stably operated because the overall device can be controlled on the basis of the set value of the $CO_2$ recovery rate at which the $CO_2$ recovery amount becomes equal to or lower than a maximum value capable of being processed by the overall device. Additionally, in a case where $CO_2$ introduced into the $CO_2$ recovery unit 1 becomes equal to or lower than the maximum value of the $CO_2$ recovery amount, the overall device can be controlled on the basis of the set value of the $CO_2$ recovery rate that is set in advance. Thus, an operational state according to a design can be brought about.

Next, the overall operation of the $CO_2$ recovery unit 1 related to the present embodiment will be described. The flue gas 11A containing $CO_2$ exhausted from industrial facilities, such as a boiler and a gas turbine, is introduced into the quencher 12, and is brought into countercurrent contact with and cooled by the cooling water $W_1$ after the $CO_2$ concentration, gas flow rate, and temperature in the flue gas 11A are measured by the flue gas detecting unit 101. The cooled flue gas 11A is introduced into the $CO_2$-absorber 14 via a flue 16. The flue gas 11A introduced into the $CO_2$-absorber 14 is brought into countercurrent contact with the $CO_2$-absorbing solution 13 containing alkanolamine or the like in the $CO_2$ absorption section 141, and becomes the flue gas 11B from which $CO_2$ in the flue gas 11A has been absorbed by the $CO_2$-absorbing solution 13 and $CO_2$ has been removed.

The flue gas 11B from which $CO_2$ has been removed rises via the chimney tray 145, is brought into gas-liquid contact with the cleaning water $W_2$ supplied from the top part side of the washing section 142, and becomes the flue gas 11C from which the $CO_2$-absorbing solution 13 entrained in the flue gas 11B has been recovered by circulation cleaning. The $CO_2$ concentration in the flue gas 11C is measured by the $CO_2$ concentration meter 102 and the flue gas 11C is exhausted from the tower top part 14a of the $CO_2$-absorber 14 to the outside, after the mist in the gas is caught by the mist eliminator 146.

The $CO_2$-absorbing solution 13 (rich solution) that has absorbed $CO_2$ is sent to the rich-lean solution heat exchanger 52 by a rich solvent pump 51 via a rich solution supply tube 50 in the $CO_2$-absorber 14. In the rich-lean solution heat exchanger 52, the $CO_2$-absorbing solution 13 (rich solution) sent from the $CO_2$-absorber 14 is heat-exchanged with the $CO_2$-absorbing solution 13 (lean solution) sent from the $CO_2$-regenerator 15. The $CO_2$-absorbing

solution 13 (rich solution) after this heat exchange is supplied to the upper part of the $CO_2$-regenerator 15. The $CO_2$-absorbing solution 13 supplied to the $CO_2$-regenerator 15 has $CO_2$ removed therefrom and becomes a semi-lean solution, while flowing down to the tower bottom part 15b via the $CO_2$-absorbing solution supply part 151. This semi-lean solution is circulated through the circulation line $L_4$, is heated by the saturated steam S in the regeneration heater 31, and becomes the $CO_2$-absorbing solution 13 (lean solution). The saturated steam S after being heated becomes the saturated steam condensed water $W_4$. The $CO_2$ gas 41 removed from the $CO_2$-absorbing solution 13 is released to the outside as the $CO_2$ gas 44 from which the condensed water $W_5$ has been separated through the upper part of the separation drum 43 after the moisture thereof is condensed by the condenser 42. As for the $CO_2$ gas 44, $CO_2$ concentration in the $CO_2$ gas 44 is measured by the $CO_2$ gas detecting unit 103.

The $CO_2$-absorbing solution 13 (lean solution) of the tower bottom part 15b of the $CO_2$-regenerator 15 is supplied to the upper part of the $CO_2$ absorption section 141 of the $CO_2$-absorber 14 by the lean solution pump 54 after being heat-exchanged with the $CO_2$-absorbing solution 13 (rich solution) by the rich-lean solution heat exchanger 52 via the lean solution supply tube 53.

Fig. 3 is a flow chart illustrating operation control using the $CO_2$ recovery amount control unit 111 related to the present embodiment. As illustrated in Fig. 3, the $CO_2$ recovery amount control unit 111 calculates the target value of the $CO_2$ recovery amount on the basis of various kinds of input data, such as the $CO_2$ set value that is set in advance, the $CO_2$ concentration in the flue gas 11A, and the flow rate and temperature of the flue gas 11A (Step ST1), and determines whether or not the calculated target value of the $CO_2$ recovery amount is equal to or lower than the maximum value of the $CO_2$ recovery amount (Step ST2). Then, in a case where the target value of the $CO_2$ recovery amount is equal to or lower than the maximum value of the $CO_2$ recovery amount, the $CO_2$ recovery amount control unit 111 controls the flow rate of the $CO_2$-absorbing solution 13 and the flow rate of the saturated steam S to be supplied to the regeneration heater 31 via the absorbing solution control unit 114 and the steam control unit 115, on the basis of the set value of the $CO_2$ recovery rate (Step ST3A). Additionally, in a case where the target value of the $CO_2$ recovery amount exceeds the maximum value of the $CO_2$ recovery amount, the $CO_2$ recovery amount control unit 111 controls the flow rate of the $CO_2$-absorbing solution 13 and the flow rate of the saturated steam S to be supplied to the regeneration heater 31 via the absorbing solution control unit 114 and the steam control unit 115, on the basis of the computed target value of the $CO_2$ recovery rate (Step ST3B).

As described above, according to the present embodiment, the circulation amount of the $CO_2$-absorbing solution 13 and the amount of the saturated steam S supplied to the regeneration heater 31 can be appropriately controlled according to changes in the target values of the $CO_2$ recovery rate and the $CO_2$ recovery amount in the flue gas 11A. Accordingly, for example, even in a case where there are changes in operation conditions, such as a case where $CO_2$ concentration in flue gas has increased, or even in a case where there is an influence on a predetermined relational expression to be used for operation control and the precision of a measuring instrument due to change of the measuring instrument, or the like, the $CO_2$ recovery unit 1 that can control the $CO_2$ recovery amount and/or the $CO_2$ recovery rate to a target value with high precision can be realized.

In addition, in the above-described embodiment, an example in which the $CO_2$ recovery amount control unit 111 continuously monitors the gas flow rate, $CO_2$ concentration, and temperature of the flue gas 11A, thereby calculating the computed target value of the $CO_2$ recovery rate has been described. However, the invention is not limited to this configuration. The $CO_2$ recovery amount control unit 111 may control the $CO_2$ recovery amount to a value equal to or lower than the computed target value of the $CO_2$ recovery amount in a case where the actual measured values of the gas flow rate, $CO_2$ concentration, and temperature of the flue gas 11A exceed predetermined threshold values. By performing such control, for example, even in a case where a malfunction has occurred in measuring instruments, such as a $CO_2$ concentration meter and a gas flowmeter, it is possible to operate the $CO_2$ recovery unit 1 appropriately.

Additionally, in the above-described embodiment, the $CO_2$ recovery amount control unit 111 may feedback-control the operation of the overall device using the computed target value of the $CO_2$ recovery amount. By performing such control, the operation of the $CO_2$ recovery unit 1 can be controlled on the basis of the $CO_2$ recovery amount in which the response of numerical fluctuations is quick relative to the $CO_2$ recovery rate. Thus, it is possible to control the operation of the $CO_2$ recovery unit 1 more stably.

In addition, an example in which the flue gas 11A containing $CO_2$ exhausted from industrial facilities, such as a boiler and a gas turbine, is treated by the $CO_2$-absorbing solution 13 has been described in the above-described embodiment. However, as gases to be treated that are treated by the $CO_2$-absorbing solution 13, various gases can be applied if they are gases containing $CO_2$. Reference Signs List

1: $CO_2$          RECOVERY UNIT
11A, 11B, 11C:   FLUE GAS
12:              QUENCHER
121:             QUENCHING SECTION

| | |
|---|---|
| 122: | HEAT EXCHANGER |
| 123: | CIRCULATION PUMP |
| 13: | $CO_2$-absorbing solution |
| 14: | $CO_2$-ABSORBER |
| 14a: | TOWER TOP PART |
| 14b: | TOWER BOTTOM PART |
| 141: | $CO_2$ ABSORPTION SECTION |
| 142: | WASHING SECTION |
| 144: | LIQUID STORAGE SECTION |
| 145: | CHIMNEY TRAY |
| 146: | MIST ELIMINATOR |
| 15: | $CO_2$-regenerator |
| 15a: | TOWER TOP PART |
| 15b: | TOWER BOTTOM PART |
| 151: | $CO_2$-absorbing solution SUPPLY PART |
| 152: | MIRROR SURFACE PART |
| 16: | FLUE |
| 21: | HEAT EXCHANGER |
| 22: | CIRCULATION PUMP |
| 23: | CONTROL VALVE |
| 31: | REGENERATION HEATER |
| 41, 44: | $CO_2$ GAS |
| 42: | CONDENSER |
| 43: | SEPARATION DRUM |
| 45: | CONDENSED WATER CIRCULATION PUMP |
| 50: | RICH SOLUTION SUPPLY TUBE |
| 51: | RICH SOLVENT PUMP |
| 52: | RICH-LEAN SOLUTION HEAT EXCHANGER |
| 53: | LEAN SOLUTION SUPPLY TUBE |
| 54: | LEAN SOLUTION PUMP |
| 55: | QUENCHING SECTION |
| 101a, 101b: | FLUE GAS DETECTING UNIT |
| 102: | $CO_2$ CONCENTRATION METER |
| 103: | $CO_2$ GAS DETECTING UNIT |
| 104: | CONCENTRATION METER |
| 111: | $CO_2$ RECOVERY AMOUNT CONTROL UNIT |
| 112: | CALCULATING UNIT |
| 113: | FLUE GAS CONTROL UNIT |
| 114: | ABSORBING SOLUTION CONTROL UNIT |
| 115: | STEAM CONTROL UNIT |
| $L_1$, $L_2$, $L_4$: | CIRCULATION LINE |
| $L_3$: | EXTRACTION LINE |
| $L_5$: | GAS EXHAUST LINE |
| $L_6$: | CONDENSED WATER LINE |
| S: | SATURATED STEAM |
| $W_1$: | COOLING WATER |
| $W_2$, $W_3$: | CLEANING WATER |
| $W_4$: | SATURATED STEAM CONDENSED WATER |
| $W_5$: | CONDENSED WATER |

**Claims**

1. A $CO_2$ recovery unit comprising:

   a $CO_2$-absorber that brings a gas to be treated and a $CO_2$-absorbing solution into contact with each other to cause $CO_2$ included in the gas to be treated to be absorbed into the $CO_2$-absorbing solution;
   a $CO_2$-regenerator that heats the $CO_2$-absorbing solution which has absorbed $CO_2$, releases $CO_2$ from the

9

$CO_2$-absorbing solution, and regenerates the $CO_2$-absorbing solution; and

a $CO_2$ recovery amount control unit that calculates a computed target value of a $CO_2$ recovery amount and a computed target value of a $CO_2$ recovery rate on the basis of a set value of the $CO_2$ recovery rate, actual measured values of $CO_2$ concentration, gas flow rate, and temperature of the gas to be treated, and maximum values of the $CO_2$ recovery amounts in the $CO_2$-absorber and the $CO_2$-regenerator and that controls the amount of the $CO_2$-absorbing solution supplied to the $CO_2$-absorber, the amount of the $CO_2$-absorbing solution supplied to the $CO_2$-regenerator and the amount of saturated steam supplied to a regeneration heater of the $CO_2$-regenerator, on the basis of the set value of the $CO_2$ recovery rate or the computed target value of the $CO_2$ recovery rate.

2. The $CO_2$ recovery unit according to Claim 1,
wherein the $CO_2$ recovery amount control unit calculates the computed target value of the $CO_2$ recovery rate on the basis of the following Formulas (1) to (3).

$$Y1 = X1 \times X2 \times X3 \times \alpha \quad \text{Formula (1)}$$

$$Y2 = \min(X4, Y1) \quad \text{Formula (2)}$$

$$Y3 = Y2/(X2 \times X3 \times \alpha) \quad \text{Formula (3)}$$

(In Formulas (1) to (3), X1 represents the set value of the $CO_2$ recovery rate, X2 represents an actual measured value of the $CO_2$ concentration of the gas to be treated, X3 represents an actual measured value of the gas flow rate of the gas to be treated, X4 represents a maximum value of the $CO_2$ recovery amount, Y1 represents a target value of the $CO_2$ recovery amount, Y2 represents a computed target value of the $CO_2$ recovery amount, Y3 represents a computed target value of the $CO_2$ recovery rate, and $\alpha$ represents a conversion factor).

3. The $CO_2$ recovery unit according to Claim 1 or 2,
wherein the $CO_2$ recovery amount control unit calculates the computed target value of the $CO_2$ recovery rate on the basis of the maximum value of the $CO_2$ recovery amount in a case where a target value of the $CO_2$ recovery amount exceeds a maximum value of the $CO_2$ recovery amount, and calculates the computed target value of the $CO_2$ recovery rate on the basis of the calculated target value of the $CO_2$ recovery amount in a case where the target value of the $CO_2$ recovery amount is equal to or lower than the maximum value of the $CO_2$ recovery amount.

4. The $CO_2$ recovery unit according to any one of Claims 1 to 3,
wherein the $CO_2$ recovery amount control unit calculates the computed target value of the $CO_2$ recovery amount on the basis of threshold values in a case where the actual measured values of the gas flow rate, $CO_2$ concentration, and temperature of the gas to be treated exceed predetermined threshold values.

5. The $CO_2$ recovery unit according to any one of Claims 1 to 4,
wherein the $CO_2$ recovery amount control unit feedback-controls the operation of the overall device using the computed target value of the $CO_2$ recovery amount.

6. A $CO_2$ recovery method comprising:

a process of bringing a gas to be treated and a $CO_2$-absorbing solution into contact with each other to cause $CO_2$ included in the gas to be treated to be absorbed into the $CO_2$-absorbing solution in a $CO_2$-absorber; and
a process of heating the $CO_2$-absorbing solution which has absorbed $CO_2$, releasing $CO_2$ from the $CO_2$-absorbing solution, and regenerating the $CO_2$-absorbing solution in a $CO_2$-regenerator,
wherein a computed target value of a $CO_2$ recovery amount and a computed target value of a $CO_2$ recovery rate are calculated on the basis of a set value of the $CO_2$ recovery rate, actual measured values of $CO_2$ concentration, gas flow rate, and temperature of the gas to be treated, and maximum values of the $CO_2$ recovery amounts in the $CO_2$-absorber and the $CO_2$-regenerator, and the amount of the $CO_2$-absorbing solution supplied to the $CO_2$-absorber, the amount of the $CO_2$-absorbing solution supplied to the $CO_2$-regenerator, and the amount of saturated steam supplied to a regeneration heater of the $CO_2$-regenerator are controlled on the basis of the set value of the $CO_2$ recovery rate or the computed target value of the $CO_2$ recovery rate.

7. The $CO_2$ recovery method according to Claim 6,
wherein the computed target value of the $CO_2$ recovery rate is calculated on the basis of the following Formulas (1) to (3).

$$Y1 = X1 \times X2 \times X3 \times \alpha \qquad \text{Formula (1)}$$

$$Y2 = \min(X4, Y1) \qquad \text{Formula (2)}$$

$$Y3 = Y2/(X2 \times X3 \times \alpha) \qquad \text{Formula (3)}$$

(In Formulas (1) to (3), X1 represents the set value of the $CO_2$ recovery rate, X2 represents the actual measured value of the $CO_2$ concentration of the gas to be treated, X3 represents the actual measured value of the gas flow rate of the gas to be treated, X4 represents the maximum value of the $CO_2$ recovery amount, Y1 represents a target value of the $CO_2$ recovery amount, Y2 represents the computed target value of the $CO_2$ recovery amount, Y3 represents the computed target value of the $CO_2$ recovery rate, and $\alpha$ represents a conversion factor).

8. The $CO_2$ recovery method according to Claim 6 or 7,
wherein the computed target value of the $CO_2$ recovery rate is calculated on the basis of a maximum value of the $CO_2$ recovery amount in a case where a target value of the $CO_2$ recovery amount exceeds a maximum value of the $CO_2$ recovery amount, and calculates the computed target value of the $CO_2$ recovery rate on the basis of the target value of the $CO_2$ recovery amount in a case where the target value of the $CO_2$ recovery amount is equal to or lower than the maximum value of the $CO_2$ recovery amount.

9. The $CO_2$ recovery method according to any one of Claims 6 to 8,
wherein the computed target value of the $CO_2$ recovery amount is calculated on the basis of threshold values in a case where the actual measured values of the gas flow rate, $CO_2$ concentration, and temperature of the gas to be treated exceed predetermined threshold values.

10. The $CO_2$ recovery method according to any one of Claims 6 to 9,
wherein the operation of the overall device is feedback-controlled using the computed target value of the $CO_2$ recovery amount.

**Amended claims under Art. 19.1 PCT**

1. (Amended) A $CO_2$ recovery unit comprising:

a $CO_2$-absorber that brings a gas to be treated and a $CO_2$-absorbing solution into contact with each other to cause $CO_2$ included in the gas to be treated to be absorbed into the $CO_2$-absorbing solution;
a $CO_2$-regenerator that heats the $CO_2$-absorbing solution which has absorbed $CO_2$, releases $CO_2$ from the $CO_2$-absorbing solution, and regenerates the $CO_2$-absorbing solution; and
a $CO_2$ recovery amount control unit that calculates a computed target value of a $CO_2$ recovery amount and a computed target value of a $CO_2$ recovery rate on the basis of a set value of the $CO_2$ recovery rate, actual measured values of $CO_2$ concentration, gas flow rate, and temperature of the gas to be treated, and maximum values of the $CO_2$ recovery amounts in the $CO_2$-absorber and the $CO_2$-regenerator and that controls the amount of the $CO_2$-absorbing solution supplied to the $CO_2$-absorber, the amount of the $CO_2$-absorbing solution supplied to the $CO_2$-regenerator, and the amount of saturated steam supplied to a regeneration heater of the $CO_2$-regenerator on the basis of the set value of the $CO_2$ recovery rate or the computed target value of the $CO_2$ recovery rate,
wherein the $CO_2$ recovery amount control unit controls the $CO_2$ recovery amount to a value equal to or lower than a computed target value of the $CO_2$ recovery amount in a case where any of the actual measured values

of the $CO_2$ concentration, gas flow rate, and temperature of the gas to be treated exceeds a predetermined threshold value.

2. The $CO_2$ recovery unit according to Claim 1,

wherein the $CO_2$ recovery amount control unit calculates the computed target value of the $CO_2$ recovery rate on the basis of the following Formulas (1) to (3).

$$Y1 = X1 \times X2 \times X3 \times \alpha \qquad \text{Formula (1)}$$

$$Y2 = \min(X4, Y1) \qquad \text{Formula (2)}$$

$$Y3 = Y2/(X2 \times X3 \times \alpha) \qquad \text{Formula (3)}$$

(In Formulas (1) to (3), X1 represents the set value of the $CO_2$ recovery rate, X2 represents an actual measured value of the $CO_2$ concentration of the gas to be treated, X3 represents an actual measured value of the gas flow rate of the gas to be treated, X4 represents a maximum value of the $CO_2$ recovery amount, Y1 represents a target value of the $CO_2$ recovery amount, Y2 represents a computed target value of the $CO_2$ recovery amount, Y3 represents a computed target value of the $CO_2$ recovery rate, and $\alpha$ represents a conversion factor).

3. The $CO_2$ recovery unit according to Claim 1 or 2,

wherein the $CO_2$ recovery amount control unit calculates the computed target value of the $CO_2$ recovery rate on the basis of the maximum value of the $CO_2$ recovery amount in a case where a target value of the $CO_2$ recovery amount exceeds a maximum value of the $CO_2$ recovery amount, and calculates the computed target value of the $CO_2$ recovery rate on the basis of the calculated target value of the $CO_2$ recovery amount in a case where the target value of the $CO_2$ recovery amount is equal to or lower than the maximum value of the $CO_2$ recovery amount.

4. (Deleted)

5. (Amended) The $CO_2$ recovery unit according to any one of Claims 1 to 3,

wherein the $CO_2$ recovery amount control unit feedback-controls the operation of the overall device using the computed target value of the $CO_2$ recovery amount.

6. (Amended)
A $CO_2$ recovery method comprising:

a process of bringing a gas to be treated and a $CO_2$-absorbing solution into contact with each other to cause $CO_2$ included in the gas to be treated to be absorbed into the $CO_2$-absorbing solution in a $CO_2$-absorber; and a process of heating the $CO_2$-absorbing solution which has absorbed $CO_2$, releasing $CO_2$ from the $CO_2$-absorbing solution, and regenerating the $CO_2$-absorbing solution in a $CO_2$-regenerator, wherein a computed target value of a $CO_2$ recovery amount and a computed target value of a $CO_2$ recovery rate are calculated on the basis of a set value of the $CO_2$ recovery rate, actual measured values of $CO_2$ concentration, gas flow rate, and temperature of the gas to be treated, and maximum values of the $CO_2$ recovery amounts in the $CO_2$-absorber and the $CO_2$-regenerator, and the amount of the $CO_2$-absorbing solution supplied to the $CO_2$-absorber, the amount of the $CO_2$-absorbing solution supplied to the $CO_2$-regenerator, and the amount of saturated steam supplied to a regeneration heater of the $CO_2$-regenerator are controlled on the basis of the set value of the $CO_2$ recovery rate or the computed target value of the $CO_2$ recovery rate, and wherein the $CO_2$ recovery amount is controlled to a value equal to or lower than a computed target value of the $CO_2$ recovery amount in a case where any of the actual measured values of the $CO_2$ concentration, gas flow rate, and temperature of the gas to be treated exceeds a predetermined threshold value.

**7.** The $CO_2$ recovery method according to Claim 6,

wherein the computed target value of the $CO_2$ recovery rate is calculated on the basis of the following Formulas (1) to (3).

$$Y1 = X1 \times X2 \times X3 \times \alpha \qquad \text{Formula (1)}$$

$$Y2 = \min(X4, Y1) \qquad \text{Formula (2)}$$

$$Y3 = Y2/(X2 \times X3 \times \alpha) \qquad \text{Formula (3)}$$

(In Formulas (1) to (3), X1 represents the set value of the $CO_2$ recovery rate, X2 represents an actual measured value of the $CO_2$ concentration of the gas to be treated, X3 represents an actual measured value of the gas flow rate of the gas to be treated, X4 represents a maximum value of the $CO_2$ recovery amount, Y1 represents a target value of the $CO_2$ recovery amount, Y2 represents a computed target value of the $CO_2$ recovery amount, Y3 represents a computed target value of the $CO_2$ recovery rate, and $\alpha$ represents a conversion factor).

**8.** The $CO_2$ recovery method according to Claim 6 or 7,

wherein the computed target value of the $CO_2$ recovery rate is calculated on the basis of a maximum value of the $CO_2$ recovery amount in a case where a target value of the $CO_2$ recovery amount exceeds a maximum value of the $CO_2$ recovery amount, and calculates the computed target value of the $CO_2$ recovery rate on the basis of the target value of the $CO_2$ recovery amount in a case where the target value of the $CO_2$ recovery amount is equal to or lower than the maximum value of the $CO_2$ recovery amount.

**9.** (Deleted)

**10.** (Amended) The $CO_2$ recovery method according to any one of Claims 6 to 8, wherein the operation of the overall device is feedback-controlled using the computed target value of the $CO_2$ recovery amount.

**Statement under Art. 19.1 PCT**

Claim 1 was limited to Claim 4.
Claim 4 was deleted.
Claim 5 was amended so as to be dependent on any one of Claims 1 to 3.
Claim 6 was limited to Claim 9.
Claim 9 was deleted.
Claim 10 was amended so as to be dependent on any one of Claims 6 to 8.

FIG. 1

EP 3 150 270 A1

# FIG. 2

INPUT DATA

ACTUAL MEASURED
VALUE OF EXHAUST
GAS

CALCULATING
UNIT
112

111

ABSORBING LIQUID
CONTROL UNIT
114

EXHAUST GAS
CONTROL UNIT
113

VAPOUR
CONTROL UNIT
115

# FIG. 3

START

CALCULATE TARGET VALUE OF
$CO_2$ RECOVERY AMOUNT
ST1

IS TARGET VALUE OF $CO_2$
RECOVERY AMOUNT EQUAL TO OR
LOWER THAN MAXIMUM
VALUE?
ST2

No

Yes

OPERATION AT SET VALUE OF
$CO_2$ RECOVERY RATE
ST3A

OPERATION AT COMPUTED
VALUE OF $CO_2$ RECOVERY RATE
ST3B

END

## INTERNATIONAL SEARCH REPORT

| | International application No. |
|---|---|
| | PCT/JP2015/067751 |

| A. CLASSIFICATION OF SUBJECT MATTER |
|---|
| *B01D53/14*(2006.01)i, *B01D53/62*(2006.01)i, *C01B31/20*(2006.01)i |

According to International Patent Classification (IPC) or to both national classification and IPC

| B. FIELDS SEARCHED |
|---|

Minimum documentation searched (classification system followed by classification symbols)
B01D53/14-53/18, B01D53/62, C01B31/20

Documentation searched other than minimum documentation to the extent that such documents are included in the fields searched
Jitsuyo Shinan Koho        1922–1996   Jitsuyo Shinan Toroku Koho   1996–2015
Kokai Jitsuyo Shinan Koho   1971–2015   Toroku Jitsuyo Shinan Koho   1994–2015

Electronic data base consulted during the international search (name of data base and, where practicable, search terms used)
WPI

| C. DOCUMENTS CONSIDERED TO BE RELEVANT |
|---|

| Category* | Citation of document, with indication, where appropriate, of the relevant passages | Relevant to claim No. |
|---|---|---|
| X | JP 2013-158685 A (Mitsubishi Heavy Industries, Ltd.), 19 August 2013 (19.08.2013), paragraphs [0012] to [0023], [0032] to [0036]; fig. 1, 2, 6, 7 & US 2014/0373720 A1    & WO 2013/114488 A1 & EP 2821121 A1 | 1-10 |
| A | JP 2012-35214 A (IHI Corp.), 23 February 2012 (23.02.2012), paragraphs [0051] to [0053]; fig. 2 (Family: none) | 1-10 |
| A | JP 2011-57485 A (Toshiba Corp.), 24 March 2011 (24.03.2011), paragraphs [0057] to [0067]; fig. 6 (Family: none) | 1-10 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 27 August 2015 (27.08.15) | 08 September 2015 (08.09.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/067751

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2012-152731 A  (Toshiba Corp.),<br>16 August 2012 (16.08.2012),<br>paragraphs [0055], [0063] to [0067]; fig. 1<br>& US 2012/0167760 A1     & EP 2474348 A2<br>& CA 2763176 A          & CN 102583375 A<br>& AU 2012200039 A1 | 1-10 |
| A | JP 2014-4525 A  (Toshiba Corp.),<br>16 January 2014 (16.01.2014),<br>paragraphs [0034], [0038]; fig. 1<br>& US 2014/0086811 A1     & EP 2679295 A2<br>& AU 2013206469 A1       & CN 103521051 A | 1-10 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5237204 B